# FASCICULE DE BREVET EUROPEEN

(11) **EP 0 908 606 B1**
(45) Date de publication et mention de la délivrance du brevet: **29.08.2001**
(21) Numéro de dépôt: 98118912.9
(22) Date de dépôt: 07.10.1998
(51) Int. Cl.: F01N 5/02, F01N 3/20

(54) **Installation d'échappement pour moteur de véhicule automobile**
Abgasanlage für einen Kraftfahrzeugmotor
Exhaust system for the engine of an automotive vehicle

(30) Priorité: 10.10.1997 FR 9712704
(43) Date de publication de la demande: 14.04.1999
(73) Titulaire: VALEO THERMIQUE MOTEUR S.A., 78321 La Verrière (FR)
(72) Inventeur: Ap, Ngy Srun, 78470 Saint Rémy Les Chevreuses (FR); Perset, Denis, 75015 Paris (FR)
(74) Mandataire: Rousset, Jean-Claude

(56) Documents cités:
- DE-A- 19 500 472
- DE-A- 19 500 476
- DE-A- 19 507 977
- DE-A- 19 706 626
- US-A- 3 050 935
- PATENT ABSTRACTS OF JAPAN vol. 096, no. 008, 30 août 1996 & JP 08 109822 A (MITSUBISHI HEAVY IND LTD), 30 avril 1996

## Description

La présente invention concerne une installation d'échappement de gaz brûlés à pot catalytique pour moteur à combustion interne de véhicule automobile.

On sait que les pots d'échappement de gaz brûlés sont de plus en plus souvent du type dit "pot catalytique". Ces pots catalytiques ont pour fonction de réduire la quantité de gaz polluants émis par les moteurs à combustion interne.

Les pots catalytiques contiennent un matériau de support, généralement de l'alumine, sur lequel sont déposés les métaux nobles qui leur permettent de remplir leur fonction. Pour que cette fonction soit assurée convenablement, il est nécessaire que la température de fonctionnement du pot catalytique soit suffisamment élevée. Les constructeurs d'automobiles ont donc tendance à rapprocher le plus possible le pot catalytique du collecteur d'échappement afin que la montée en température de ce pot catalytique soit la plus rapide possible lors du démarrage du moteur à froid.

A l'inverse, des températures de fonctionnement trop élevées réduisent la durée de vie d'un pot catalytique par transformation irréversible du matériau de support. De telles températures sont également dommageables pour l'ensemble de la ligne d'échappement et nécessitent l'emploi de matériaux plus résistants et donc plus coûteux pour chaque composant de cette ligne (silencieux, conduits,...). Or, de telles températures risquent d'être atteintes lorsque le moteur est en charge élevée, par exemple sur autoroute.

Par ailleurs, l'amélioration du rendement thermique des moteurs à combustion interne, notamment des moteurs diesel ou essence à injection directe, entraîne une réduction des pertes thermiques vers le circuit de refroidissement. Or, c'est sur ce circuit de refroidissement qu'est prélevée la chaleur nécessaire au chauffage de l'habitacle. Cette amélioration du rendement peut ainsi provoquer une insuffisance du chauffage.

Enfin, la nécessité de réduire les émissions polluantes du moteur thermique conduit à utiliser de nouveaux types de catalyseurs, dont une spécificité est de fonctionner dans une plage étroite de températures.

La présente invention vise à pallier ces inconvénients. Plus précisément, elle vise notamment à limiter ou réguler la température des gaz à l'entrée du pot catalytique tout en permettant une montée rapide en température de ce dernier. L'invention vise également à améliorer le chauffage de l'habitacle du véhicule et le taux de conversion des catalyseurs.

A cet effet, l'invention a pour objet une installation d'échappement de gaz brûlés à pot catalytique pour moteur à combustion interne de véhicule automobile, qui comprend au moins un échangeur de chaleur, des moyens de sélection pour sélectivement diriger lesdits gaz brûlés en totalité ou en partie dans ledit échangeur en vue de leur refroidissement, et des moyens pour utiliser la chaleur du fluide de refroidissement dudit échangeur en vue du chauffage de l'habitacle du véhicule.

Une installation de ce type est connue d'après le document DE 197 06 626A.

Une installation de ce type permet donc en premier lieu de réduire la température des gaz d'échappement en entrée du pot catalytique puisque l'on peut, préalablement à cette entrée, leur faire parcourir l'échangeur de chaleur en vue de leur refroidissement. Cet échangeur n'est pas toutefois pénalisant pour la montée en température du pot catalytique puisque les moyens de sélection permettent d'amener les gaz à ne pas traverser cet échangeur tant qu'ils n'ont pas atteint une température suffisante. Par ailleurs, la chaleur ainsi prélevée aux gaz d'échappement peut être utilisée au chauffage de l'habitacle du véhicule. A cet effet, l'échangeur de chaleur est de préférence parcouru par le fluide de refroidissement du moteur puisque c'est la chaleur de ce fluide qui est déjà utilisée pour le chauffage de l'habitacle.

Enfin, une telle installation permet de réguler la température des gaz brûlés à l'entrée du pot catalytique en faisant circuler une certaine quantité de gaz brûlés dans l'échangeur.

Dans l'installation connue par DE 197 06 626A, l'échangeur de chaleur est disposé en aval du pot catalytique et les moyens de sélection comprennent une vanne d'étranglement disposée sur un conduit principal en aval du pot catalytique.

On connaît par ailleurs d'après le document US 3 050 935A une installation d'échappement de gaz brûlés à pot catalytique qui s'apparente à celle du document DE 197 06 626A, mais dans laquelle une vanne sensible à la température fait passer les gaz d'échappement dans l'échangeur de chaleur lorsque la température de ces gaz dépasse un seuil prédéterminé. Cette installation ne permet pas de sélectivement diriger les gaz brûlés en totalité ou en partie dans cet échangeur de chaleur. De plus, cette installation connue ne comprend pas de moyens pour utiliser la chaleur du fluide de refroidissement en vue du chauffage de l'habitacle.

L'invention propose un autre mode de réalisation qui s'apparente à l'installation du document DE 197 06 626A.

Conformément à l'invention, l'échangeur est disposé en amont du pot catalytique dans le sens d'écoulement des gaz brûlés, une canalisation étant prévue pour court-circuiter l'échangeur, et les moyens de sélection comprennent au moins une vanne en amont de l'échangeur pour sélectivement diriger les gaz brûlés en totalité ou en partie dans ledit échangeur ou dans ladite canalisation et une deuxième vanne entre l'échangeur et le pot catalytique au point où débouche la canalisation.

La vanne utilisée en amont de l'échangeur peut comporter une entrée et une sortie ou, en variante, une entrée et deux sorties. Dans cette variante, l'une ou l'autre des deux sorties peut être alimentée par l'entrée, ou bien les deux sorties peuvent être alimentées simultanément par ladite entrée.

La deuxième vanne permet de relier l'entrée du pot catalytique soit à la sortie de l'échangeur, soit à la canalisation de dérivation.

On décrira maintenant, à titre d'exemple non limitatif, des modes de réalisation particuliers de l'invention, en référence aux dessins schématiques annexés dans lesquels :
- les figures 1a à 1c illustrent un premier mode de réalisation de l'invention dans trois configurations de fonctionnement différentes;
- les figures 2a à 2c illustrent une variante de ce premier mode de réalisation de l'invention dans les trois configurations de fonctionnement précitées;
- les figures 3a et 3b présentent une autre installation dans deux configurations de fonctionnement différentes; et
- les figures 4a et 4b sont des vues similaires aux figures 3a et 3b d'une autre installation.

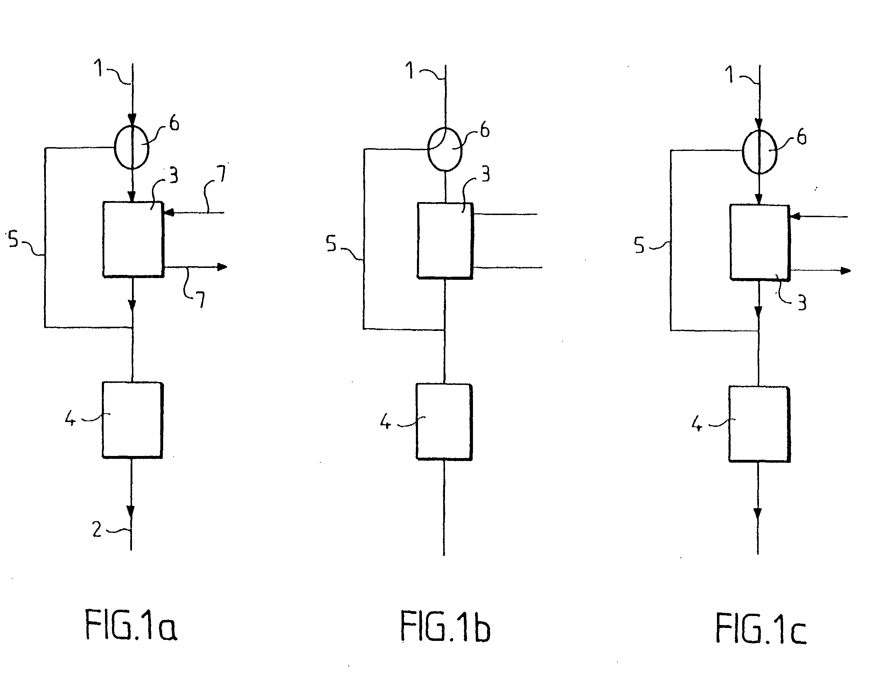

L'installation représentée aux figures 1 est disposée entre un conduit 1 provenant du collecteur d'échappement du moteur et un conduit 2 de rejet des gaz brûlés à l'air libre.

Un échangeur de chaleur 3 est disposé en amont du pot catalytique 4 dans le sens de l'écoulement des gaz brûlés, c'est-à-dire dans le sens allant du conduit 1 au conduit 2.

Une canalisation 5 reliant l'amont à l'aval de l'échangeur 3 permet de le court-circuiter. A cet effet, un moyen de sélection, tel qu'une vanne à trois voies 6 est disposée à l'entrée de l'échangeur 3 pour diriger sélectivement les gaz provenant du conduit 1 soit vers l'échangeur 3 soit vers la canalisation 5.

Enfin, des canalisations 7 assurent l'entrée et la sortie du fluide de refroidissement dans l'échangeur 3. Les canalisations 7 peuvent être reliées par tout moyen convenable au circuit de refroidissement du moteur.

La configuration de la figure 1a est celle qui est adoptée lorsque la température des gaz dans le conduit 1 dépasse la température critique d'utilisation du catalyseur, de l'ordre par exemple de 700°C. Dans ce cas, la vanne à trois voies 6 est disposée de telle sorte que les gaz brûlés parcourent l'échangeur 3 avant de pénétrer dans le pot catalytique 4 quel que soit l'état de la commande du chauffage.

Les figures 1b et 1c correspondent au cas où la température des gaz est inférieure à la température critique d'utilisation du catalyseur. Dans ce cas, la position de la vanne 6 dépend de la commande du chauffage.

Si le chauffage n'est pas actionné, comme montré à la figure 1b, la vanne 6 est placée de telle sorte que les gaz provenant du conduit 1 soient directement dirigés à l'entrée du pot catalytique 4 par l'intermédiaire de la canalisation 5. L'échangeur 3 n'est alors pas utilisé.

Au contraire, à la figure 1c, le chauffage est actionné. Dans ce cas, on refroidit les gaz brûlés dans l'échangeur 3 bien que ceci ne soit pas nécessaire au fonctionnement du pot catalytique. La vanne 6 est alors disposée de telle sorte que les gaz provenant du conduit 1 soient dirigés à travers l'échangeur 3 avant de pénétrer dans le pot catalytique 4. On comprend que la priorité est donnée au chauffage puisqu'en abaissant la température des gaz en-dessous de la température critique, on amène le pot catalytique à fonctionner avec une moins grande efficacité.

Dans une variante du mode de réalisation des figures 1, on prévoit une deuxième vanne à trois voies à la jonction de la canalisation 5 et du conduit 8 entre la sortie de l'échangeur 3 et l'entrée du pot catalytique 4. Cette deuxième vanne est commandée simultanément à la vanne 6 pour relier l'entrée du pot catalytique 4 soit à la sortie de l'échangeur 3 dans la configuration correspondant à celle des figures 1a et 1c, soit à la canalisation 5 dans la configuration correspondant à celle de la figure 1b. Cette deuxième vanne permet ainsi d'isoler totalement l'échangeur 3 lorsqu'il n'est pas utilisé.

Les figures 2a à 2c représentent une autre variante du mode de réalisation des figures 1a à 1c, qui diffère de cette dernière par la structure de la vanne 6. En effet, dans le cas des figures 1a à 1c, la vanne 6, ou plus exactement la partie mobile de celle-ci, comprend une seule entrée et une seule sortie. Par contre dans le cas des figures 2a à 2c, sont prévues une entrée et deux sorties. Des moyens permettent à l'entrée d'alimenter soit l'une ou l'autre des deux sorties, soit les deux simultanément. Autrement dit, la vanne permet de diriger les gaz brûlés dans l'une ou l'autre de deux directions ou bien dans les deux à la fois.

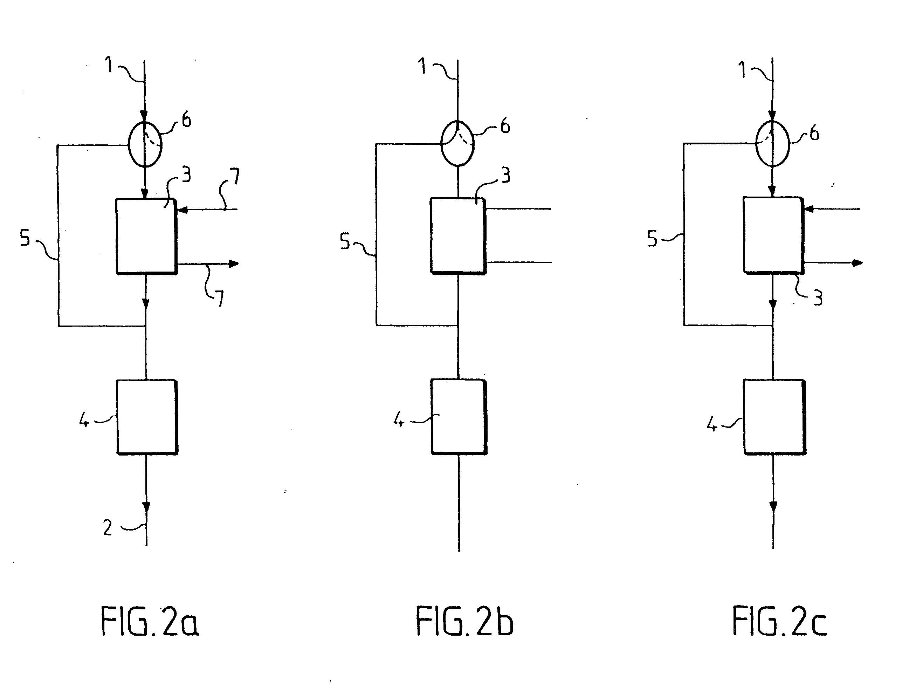

Dans les configurations des figures 2a et 2b, la vanne est opératoire pour envoyer les gaz brûlés dans une seule direction, si bien que l'on retrouve respectivement les configurations des figures 1a et 1b décrites plus haut. Par contre dans la configuration de la figure 2c, la vanne est opératoire pour envoyer les gaz brûlés simultanément dans deux directions, à savoir vers l'échangeur 3 et la canalisation 5. Ainsi, la vanne des figures 2a à 2b permet de diriger le flux des gaz brûlés en partie ou en totalité dans l'échangeur.

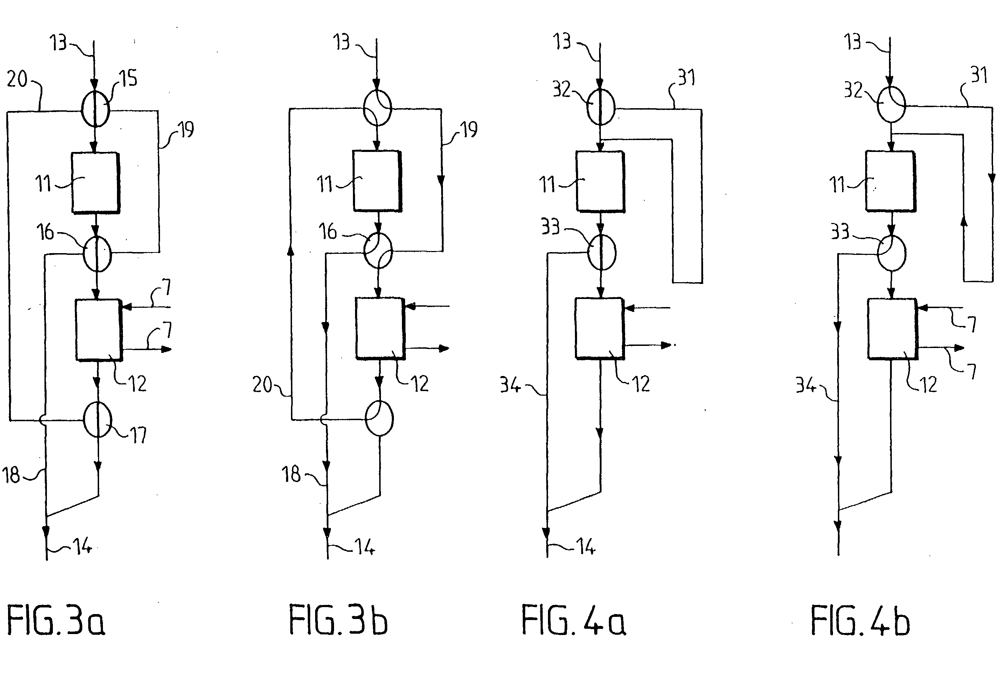

Les figures 3a et 3b représentent un cas (qui ne fait pas partie de l'invention revendiquée) où le pot catalytique 11 se trouve en amont de l'échangeur 12 dans le sens normal d'écoulement des gaz brûlés, allant du conduit d'entrée 13 relié au collecteur d'échappement au conduit 14 de mise à l'air libre des gaz brûlés.

On trouve dans ce cas, successivement, une première vanne à quatre voies 15 en amont du pot catalytique 11, une deuxième vanne à quatre voies 16 entre la sortie du pot catalytique 11 et l'entrée dans l'échangeur 12 et une vanne à trois voies 17 en aval de l'échangeur de chaleur 12.

Une canalisation 18 est disposée entre la vanne 16 et le conduit 14 pour permettre de court-circuiter l'échangeur 12. Une deuxième canalisation 19 est disposée entre la vanne 15 et la vanne 16 pour court-circuiter le pot catalytique 11. Enfin, une troisième canalisation 20 est disposée entre la vanne 15 et la vanne 17 pour ramener à l'entrée du pot catalytique 11 les gaz sortant de l'échangeur de chaleur 12.

Lorsque la température des gaz dans le conduit 13 est inférieure à la température critique d'utilisation du catalyseur, les vannes 15, 16 et 17 sont disposées comme représenté à la figure 3a. Les gaz s'écoulent alors successivement dans le pot catalytique 11 et dans l'échangeur de chaleur 12. Ainsi, l'échangeur ne retarde pas la montée en température du catalyseur et prélève de la chaleur pour le chauffage de l'habitacle.

Au contraire, si la température des gaz dans le conduit 13 vient à dépasser la température critique d'utilisation du catalyseur, les vannes sont disposées comme représenté à la figure 3b. Le pot catalytique 11 est tout d'abord court-circuité par la canalisation 19 pour conduire les gaz trop chauds vers l'échangeur de chaleur 12. En sortie de l'échangeur 12, les gaz partiellement refroidis sont ramenés par la canalisation 20 à l'entrée du pot catalytique 11. Enfin, à la sortie du pot 11, ils sont dirigés par la vanne 16 vers la canalisation 18 de court-circuit de l'échangeur 12 puis vers le conduit 14 de mise à l'air libre.

On observera que les vannes à quatre voies 15 et 16 pourraient en variante être remplacées par des vannes à trois voies. La canalisation 20 se raccorderait alors sur la ligne principale entre la sortie de la vanne 15 et l'entrée dans le pot catalytique 11. De même, la canalisation 19 se raccorderait sur la ligne principale entre la sortie de la vanne 16 et l'entrée dans l'échangeur de chaleur 12.

Enfin, dans la variante des figures 4a et 4b (qui ne fait pas partie de l'invention revendiquée), le pot catalytique 11 est encore disposé en amont de l'échangeur de chaleur 12 entre les conduits 13 et 14. Dans ce cas, toutefois, l'échangeur 12 ne sert qu'à la récupération de chaleur pour le chauffage de l'habitacle. Le refroidissement des gaz en entrée du pot catalytique 11 est ici assuré par une boucle de refroidissement 31 en amont du pot catalytique 11.

Une première vanne à trois voies 32 permet de diriger les gaz provenant du conduit 13 soit directement à l'entrée du pot catalytique 11, soit dans la boucle de refroidissement 31 raccordée elle-même à la ligne principale à l'entrée du pot catalytique 11. Une deuxième vanne à trois voies 33 permet de diriger les gaz de sortie du pot catalytique 11 soit vers l'échangeur de chaleur 12, soit dans une canalisation 34 court-circuitant cet échangeur 12 vers le conduit 14.

Lorsque la température des gaz dans le conduit 13 est inférieure à la température critique d'utilisation du catalyseur, la vanne 32 est disposée comme représentée à la figure 3a pour conduire ces gaz directement à l'entrée du pot catalytique 11. A la sortie du pot catalytique, ces gaz sont dirigés par la vanne 33 à travers l'échangeur de chaleur 12.

Dans le cas où la température des gaz dans le conduit 13 est supérieure à la température critique d'utilisation du catalyseur, la vanne 32 est disposée comme représenté à la figure 4b pour diriger ces gaz vers la boucle de refroidissement 31. En sortie du pot catalytique 11, la vanne 33 dirige les gaz dans la canalisation 34 de dérivation de l'échangeur de chaleur 12. On observera que la boucle de refroidissement 31 peut être constituée par un échangeur gaz-air ou un échangeur gaz-eau.

Il est à noter que dans la description qui précède, il est fait référence à des vannes, mais il peut être envisagé que ces vannes soient remplacées par tout autre moyen de sélection.

## Revendications

1. Installation d'échappement de gaz brûlés à pot catalytique (4) pour moteur à combustion interne de véhicules automobiles, comprenant au moins un échangeur de chaleur (3), qui est disposé en amont du pot catalytique (4) dans le sens d'écoulement des gaz brûlés, une canalisation (5) étant prévue pour court-circuiter l'échangeur, des moyens de sélection (6) pour sélectivement diriger lesdits gaz brûlés en totalité ou en partie dans ledit échangeur en vue de leur refroidissement, et des moyens (7) pour utiliser la chaleur du fluide de refroidissement dudit échangeur en vue du chauffage de l'habitacle du véhicule,
**caractérisée en ce que** les moyens de sélection comprennent au moins une vanne (6) en amont de l'échangeur pour sélectivement diriger les gaz brûlés en totalité ou en partie dans ledit échangeur ou dans ladite canalisation et une deuxième vanne entre l'échangeur et le pot catalytique au point où débouche ladite canalisation.

## Patentansprüche

1. Auspuffanlage mit Katalysator (4) für Abgase von Verbrennungsmotoren von Kraftfahrzeugen, mit wenigstens einem Wärmetauscher (3), der in Strömungsrichtung der Abgase vor dem Katalysator (4) angeordnet ist, wobei eine Rohrleitung (5) zum Kurzschließen des Wärmetauschers (3) vorgesehen ist, mit Wahlmitteln (6), um entweder die gesamten Abgase oder einen Teil davon zu deren Kühlung in den Wärmetauscher zu leiten, und Mitteln (7), um die Wärme der Kühlflüssigkeit des Wärmetauschers (3) zur Heizung des Fahrzeuginnenraums zu nutzen, **dadurch gekennzeichnet**, dass die Wahlmittel mindestens ein Ventil (6) vor dem Wärmetauscher beinhalten, um entweder die gesamten Abgase oder einen Teil davon in den Wärmetauscher oder in die Rohrleitung zu leiten, und ein zweites Ventil zwischen dem Wärmetauscher und dem Katalysator, an der Stelle, wo die Rohrleitung mündet.

## Claims

1. Combustion gas exhaust system with catalytic converter (4) for a motor vehicle internal combustion engine, comprising at least one heat exchanger (3), which is disposed upstream of the catalytic converter (4) in the direction of flow of the combustion gases, piping (5) being provided for short-circuiting the exchanger, selection means (6) for selectively directing said combustion gases in whole or in part into said exchanger with a view to their cooling, and means (7) for using the heat from the cooling fluid of said exchanger with a view to heating the passenger compartment of the vehicle,
**characterised in that** the selection means comprise at least one valve (6) upstream of the exchanger for selectively directing the combustion gases in whole or in part into said exchanger or into said piping and a second valve between the exchanger and the catalytic converter at the point into which said piping runs.
